# EUROPÄISCHE PATENTSCHRIFT

(11) **EP 1 005 952 B1**
(45) Veröffentlichungstag und Bekanntmachung des Hinweises auf die Patenterteilung: **23.06.2004**
(21) Anmeldenummer: 99122807.3
(22) Anmeldetag: 17.11.1999
(51) Int. Cl.: B23Q 3/10, B23Q 3/06

(54) **Grundplatte zum Aufbau von Vorrichtungen zum Aufspannen von Werkstücken**
Base plate for the construction of work-clamping devices
Plaque de base pour la construction de dispositifs de serrage de pièces

(30) Priorität: 01.12.1998 DE 29821418 U
(43) Veröffentlichungstag der Anmeldung: 07.06.2000
(73) Patentinhaber: Horst Witte Entwicklungs- und Vertriebs-KG, 21369 Nahrendorf (DE)
(72) Erfinder: Witte, Horst, 21369 Nahrendorf (DE)
(74) Vertreter: von Raffay, Vincenz, Dipl.-Ing.

(56) Entgegenhaltungen:
- DE-A- 4 038 969
- DE-U- 29 906 191
- GB-A- 1 217 741
- US-A- 5 501 437
- US-A- 5 732 455

## Beschreibung

Die Erfindung betrifft eine Grundplatte zum Aufbau von Vorrichtungen zum Aufspannen von Werkstücken in definierter und reproduzierbarer Lage mit in regelmäßigen Koordinatenabständen ausgebildeten Rasterpunkten.

Aus der EP 0 222 147 B1 ist ein System zum Aufbau von Vorrichtungen bekannt, zu dem eine Grundplatte der vorstehend genannten Art gehört, auf die die Vorrichtung dieses Systems aufbaubar ist. Die Grundplatte dieses bekannten Systems weist in regelmäßigen Koordinatenabständen angeordnete Paßbohrungen auf. Diese Paßbohrungen bilden Rasterpunkte, durch die ein Rastermaß vorgegeben ist.

Der Erfindung liegt nun die Aufgabe zugrunde, eine Grundplatte der eingangs genannten Art zu schaffen, die ohne Verlust an Präzision preiswerter hergestellt werden kann, sowie einen möglichst universellen Einsatz erlaubt.

Diese Aufgabe wird grundsätzlich durch das Kennzeichen des Anspruches 1 gelöst.

Die mechanische Bearbeitung der Grundplatte beschränkt sich im wesentlichen auf die Herstellung der konkaven Kugelkalotten, die auf einer oder auf beiden Oberflächen in dem vorgegebenen Rastermaß hergestellt werden. Die Mittelpunkte der Kugelkalotten liegen nicht zwangsläufig auf der körperlichen Oberfläche der Grundplatte, sondern auf der "idealen Oberfläche". Wenn die tatsächliche Form der Grundplatte von der Idealform abweicht, und dieses ist bei unbearbeitetem Gußaluminium in der Regel der Fall, so liegen die Mittelpunkte immer auf der Idealform und entsprechend definieren die konkaven Kugelkalotten ebenfalls die Idealform. Wenn diese konkaven Kugelkalotten dann als Rasterpunkte zum Befestigen von Verbindungselementen und anderen Vorrichtungsbaukastenteilen dienen, so werden diese befestigten Bauteile, wie auch beispielsweise Fußelemente, immer ausgehend von der idealen Plattenform, aufgebaut. Der Verlauf und die Gestaltung der tatsächlichen Oberfläche der Grundplatte spielt hierbei keine Rolle. Die Mittelpunkte der konkaven Kugelkalotten liegen also nicht auf der Oberfläche der tatsächlichen Grundplatte, sondern auf ihrer Idealform. Entsprechend unterschiedlich groß kann die Fläche der Kugelkalotten, die durch maschinelles Bearbeiten hergestellt wird, sein.

In besonders vorteilhafter Wiese ist die Grundplatte so ausgebildet, wie in Anspruch 2 angegeben.

Durch diese Ausbildung als Gitterwerk wird eine sehr leichte Grundplatte geschaffen, die dennoch eine hohe Festigkeit bezüglich Torosion und Biegung aufweist. Besonders ökonomisch läßt sich diese Grundplatte als Gußteil aus Aluminiumguß herstellen. Hierdurch wird eine Bearbeitung gar nicht oder nur im geringem Maße erforderlich. Eine entsprechende Präzision ist nicht gefordert, da diese durch die Kugelkalotten und ihre sehr genau auf der Idealform liegenden Mittellinien erreicht wird. Die Kugelkalotten sind in den Mittelpunkten der Gitterstäbe ausgebildet, gegebenenfalls in dort etwas verdicktem Querschnitt der Gitterstäbe, wodurch unter Berücksichtigung der geometrischen Gesetze das Rastermaß eingehalten wird. Die Diagonale ist bei entsprechender quadratischer Grundstruktur immer 2 x dem Rastermaß. Die Durchbrüche weisen einen im wesentlichen quadratischen Querschnitt auf, der lediglich durch Verdickungen im Bereich der konkaven Kugelkalotten und der Knotenpunkte verändert ist.

Weitere vorteilhafte Ausgestaltungen dieser Grundplatte sind Gegenstand der Ansprüche 3 und 4.

Wenn die Grundplatte, wie in Anspruch 5 definiert, teilbar ist, so bedeutet dieses, daß aus einer großen Grundplatte kleinere herausgeschnitten werden können, die dann wiederum zu anders dimensionierten größeren Grundplatten zusammengesetzt werden können. Durch die besondere Ausgestaltung und Verbindung mit den scheibenförmigen Linsen wird sichergestellt, daß beim Zusammenbau mehrerer auf diese Weise hergestellter kleinerer Grundplatte das Rastermaß nicht gestört wird. Das Fleisch, das beim Trennen entfernt wird, wird durch die wirksame Dicke der scheibenförmigen Linsen wieder "hinzugefügt". Hierdurch lassen sich aus kleinen Grundplatten unterschiedlich große und gestaltete Grundplatten zusammensetzen.

Besonders vorteilhaft kann die Grundplatte nach Anspruch 6 eingesetzt werden, wenn die Gefahr besteht, daß die Oberfläche einer hohen mechanischen Beanspruchung oder einer Verschmutzungsgefahr ausgesetzt wird. In diesem Falle wird die mit den konkaven Kugelkalotten versehene Oberfläche als Unterseite gewählt, so daß die unbearbeitete Seite oben liegt. Die konkaven Kugelkalotten auf der dann unten liegenden Seite werden zur Befestigung von Fuß- und/oder Verbindungselementen unter Ausnutzung des Rastermaßes der Kugelkalotten genutzt. Durch die Durchbrüche sind die Füße dieser Fuß- oder Verbindungselemente durchsteckbar durch Drehung dann mit den Kugelkalotten verbindbar, um dann durch geeignete Befestigungsmittel befestigt zu werden.

Die Grundplatte in ihren verschiedenen Ausgestaltungen, insbesondere nach den Ansprüche 2, 5 und 6, läßt sich, ausgehend von der Grundform als Gitterwerk, mit den konkaven Kugelkalotten in sehr unterschiedlicher Weise und damit universell einsetzen. Selbstverständlich dient sie auch als Teil eines System zum Aufbau von Vorrichtungen, wie es eingangs als bekannt beschrieben wurde.

Im folgenden wird die Erfindung unter Hinweis auf die Zeichnung anhand verschiedener Ausführungsbeispiele näher erläutert:

Es zeigt:
- Fig. 1:: eine perspektivische Ansicht einer Ausführungsform einer Grundplatte nach der Erfindung;
- Fig. 2:: eine Draufsicht auf eine andere Ausführungsform einer Grundplatte nach der Erfindung;
- Fig. 3:: eine Ansicht der Ausführungsform der Grundplatte nach Fig. 2, jedoch mit angebauten Fuß- und Systembauteilen;
- Fig. 4:: eine Ansicht einer Grundplatte, die grundsätzlich derjenigen nach den Fig. 2 und 3 entspricht, jedoch geteilt und wieder zusammengebaut ist, ohne Störung des Rastermaßes der Kugelkalotten;
- Fig. 5:: eine Ansicht der Grundplatte nach der Ausführungsform nach Fig. 2, jedoch umgedreht, so daß die konkaven Kugelkalotten auf der geschützten Unterseite liegen; und
- Fig. 6:: eine Ansicht der Darstellung der Fig. 2, jedoch von unten zur Veranschaulichung der Befestigung von Fuß- und Verbindungselementen.

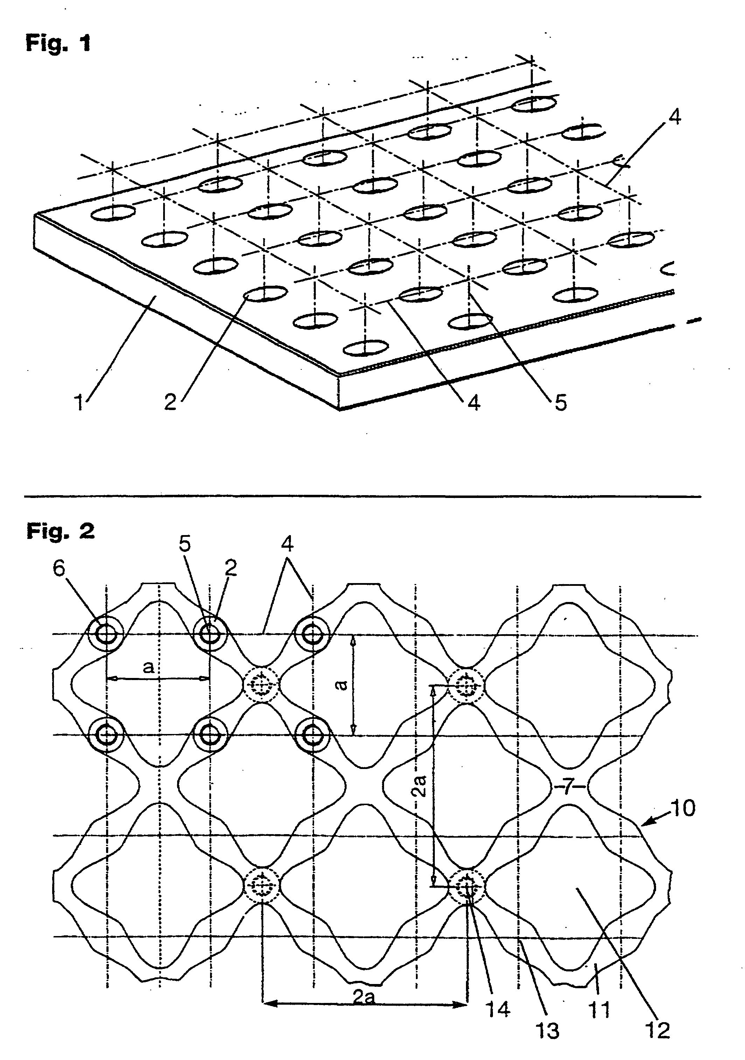

In Fig. 1 ist eine Grundplatte 1 dargestellt, bei der die wesentlichen Merkmale der Erfindung vorhanden sind. Die Grundplatte weist eine mehr oder weniger stark bearbeitete Oberfläche auf, die aber nicht die präzise für eine derartige Grundplatte gewünschte Form und Dimension aufweist. Die ideale Plattenform oder Oberfläche wird durch die Mittellinien 4 von konkaven Kugelkalotten 2 festgelegt, die in der Oberfläche durch maschinelles Bearbeiten präzise hergestellt sind. Diese Kugelkalotten 2 sind in dem vorgegebenen Rastermaß in der X- und Y-Ebene angeordnet. Nur die Kugelkalotten 2 sind präzise hergestellt. Ihre Mittelpunkte liegen auf der idealen Aufspannfläche der Grundplatte, so daß ein präziser Aufbau auf dieser Grundplatte möglich ist, ohne daß die eigentliche Oberfläche hierbei eine Rolle spielt.

Befestigungsbohrungen können mit Hilfe von entsprechenden Bohrvorrichtungen in die konkaven Kugelkalotten in Richtung der Mittelachse gebohrt werden. Diese sind nicht gezeigt.

In Fig. 2 ist im Ausschnitt als Draufsicht eine besonders vorteilhafte Ausführungsform einer Grundplatte 10 dargestellt. Diese ist als Gitterwerk als Gußkörper aus Aluminiumguß hergestellt. Die Gitterstäbe 11, die regelmäßig als Diagonalen von Quadraten angeordnet sind, definieren im wesentlichen quadratische Durchbrüche 12, die lediglich Verdickungen 13 in ihren Mitten aufweisen, die genügend Fleisch für die konkaven Kugelkalotten 2 zur Verfügung stellen. Die Kugelkalotten 2 liegen mit ihren Mittelpunkten auf einem Quadrat, dessen Seitenlänge a dem Rastermaß entspricht. Die Diagonalen, d.h. die Gitterstäbe 11, weisen eine Länge von a x √2 auf.

Wenn in den Knoten der Diagonalen zusätzliche konkave Kugelkalotten 2 mit Mittelpunkten 14 ausgebildet sind, so weisen diese untereinander einen Abstand von 2a auf. Auch bezüglich dieser zusätzlichen in den Knoten liegenden Kugelkalotten wird das Rastermaß im Prinzip aufrechterhalten.

Die Durchbrüche 12 haben theoretisch die Form eines Quadrates, das lediglich durch die Verdickungen 13 und die Ausbildung der Knoten 7 gestört wird. In den Kugelkalotten sind Befestigungsbohrungen 6, vorzugsweise mit Gewinde, vorgesehen.

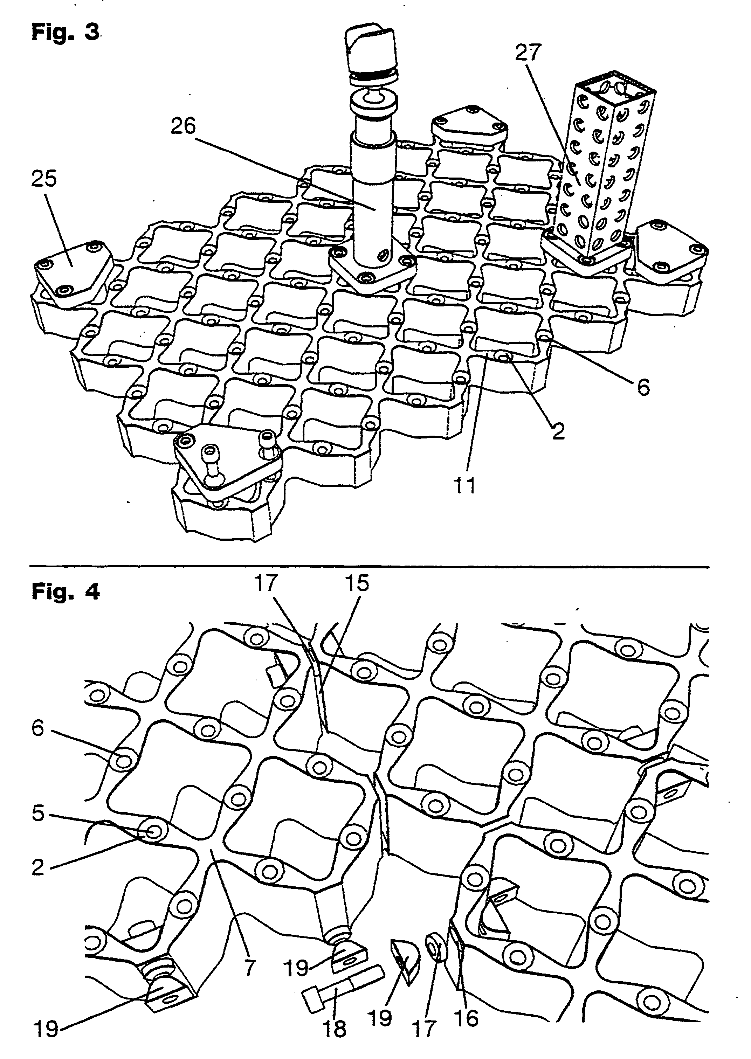

Diese Kugelkalotten dienen der Befestigung unterschiedlichster Fuß- und Verbindungselemente, wie es in Fig. 3 veranschaulicht ist. Die Fußelemente 25 weisen auf ihrer Unterseite bei dieser Ausführungsform mindestens drei konvexe Kugelkalotten auf, die in den konkaven Kugelkalotten 4 liegen. Befestigungsschrauben gehen durch die Kugelkalotten hindurch und sind in das Gewinde der Befestigungsbohrungen eingeschraubt. Die Füße, die eine genaue und vorgegebene Länge im Verhältnis zu den konvexen Kugelkalotten aufweisen, erlauben eine präzise Anordnung und Ausrichtung der idealen Oberfläche der Plattform, die durch die Mitten der konkaven Kugelkalotten 2 definiert ist.

Mit Hilfe der Kugelkalotten 2 und den Befestigungsbohrungen 6 lassen sich die unterschiedlichsten Verbindungs- und Aufbauelemente, wie teleskopartig verstellbare Befestigungselemente 26 oder andere Baukastenelemente, wie ein Aufnahmerohr 27, mit einem angepaßten oder einem anderen Rastermaß der Aufnahmebohrungen befestigen.

In Fig. 4 ist dargestellt, wie aus einer großen, durch Gießen hergestellten Grundplatte aus Aluminium kleinere Platten hergestellt und dann unter Einhaltung des Rastermaßes wieder zusammengebaut werden können. Das Fleisch, das beim Trennen in einer Ebene durch die Knoten 7 entfernt wird, wird beim Zusammensetzen durch scheibenförmige Linsen 17 wieder ausgeglichen, die wirksame Dicke der scheibenförmigen Linsen entspricht dem entfernten Fleisch. Hierdurch wird das Rastermaß a zwischen den Kugelkalotten 2 beim Zusammenbau eingehalten. Zusammengebaut werden die getrennten Grundplatten durch konkave Kugelkalottenflächen 16 mit Befestigungsbohrungen in den Trennflächen. Befestigungsschrauben 18 mit Zwischenstücken und Muttern 19 erlauben eine sichere und präzise Verbindung. Hierdurch lassen sich Grundplatten unterschiedlicher Formate aufbauen, ohne daß das Rastermaß gestört wird.

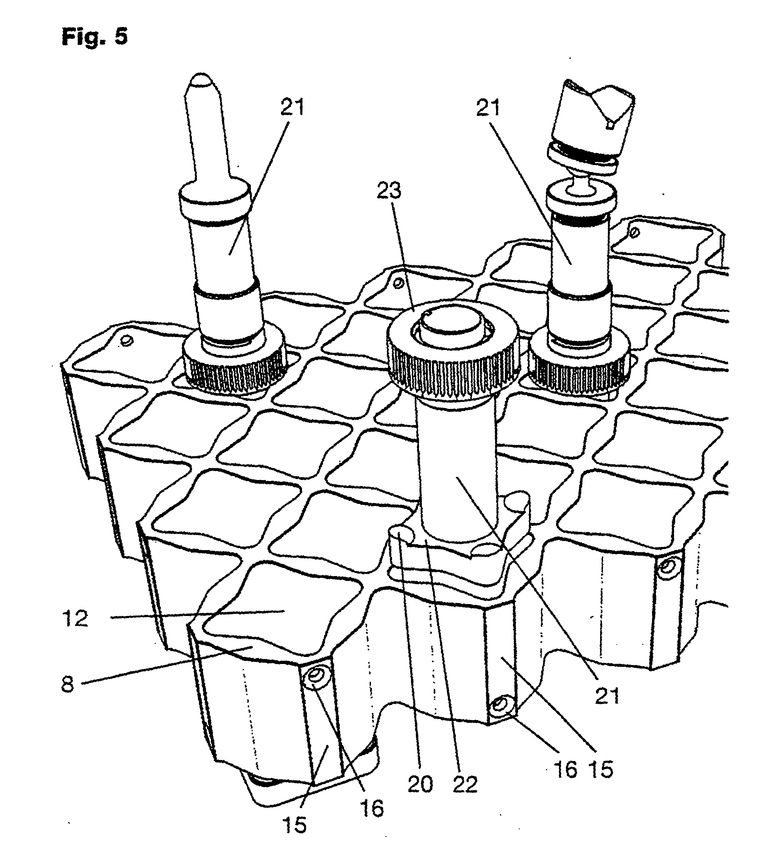

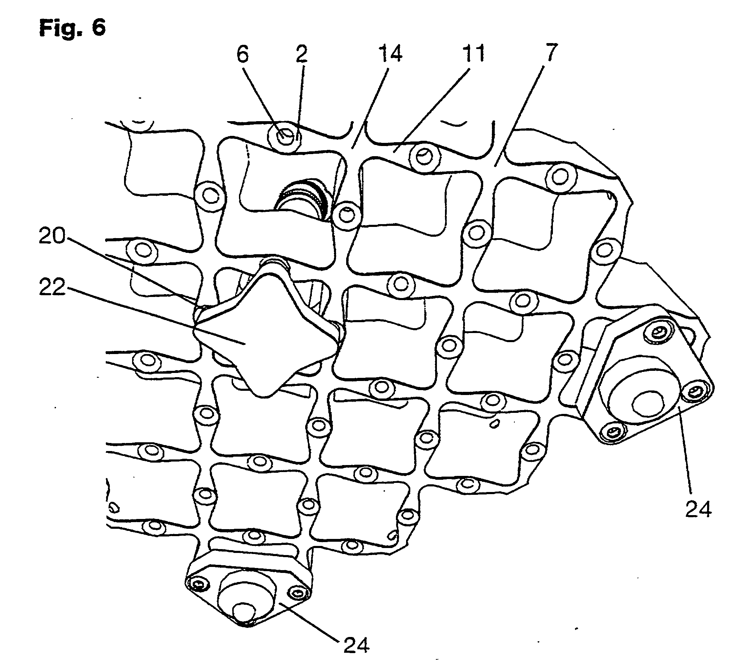

In den Fig. 5 und 6 ist dargestellt, wie die Grundplatte nach der Ausführungsform nach den Fig. 2 bis 4 besonders vorteilhaft eingesetzt werden kann, wenn eine hohe Beanspruchung oder Verschmutzungsgefahr für die Oberfläche besteht, die die konkaven Kugelkalotten aufweist. Diese Oberfläche wird dann nach unten gedreht (upside down), so daß die unbearbeitete Fläche oben liegt und einer eventuellen Verschmutzung oder Beanspruchung ausgesetzt wird. Durch die im wesentlichen quadratisch geformten Durchbrüche 12 werden dann Fuß- oder Verbindungselemente hindurchgesteckt und mit Hilfe der auf der Unterseite liegenden Kugelkalotten 2 positioniert. Zu diesem Zweck weisen die Füße 22 der Fuß- oder Verbindungselemente 21 eine Form auf, die derjenigen des Querschnitts des Durchbruches entspricht, aber durch diesen Durchbruch hindurchsteckbar ist. Wenn das Durchstecken erfolgt ist, wird der Fuß um die Durchsteckachse um 45° gedreht, so daß konvexe Kugelkalotten 20 auf der entsprechenden "Oberseite" der Füße 22 in die konkaven Kugelkalotten 2 einrasten können. Das Verbindungselement 21 kann dann mit Hilfe eines Befestigungsmittels 23, das in diesem Falle ein Gewindering ist, befestigt werden. Es ist möglich, auf diese Weise ebenfalls Fußelemente zu befestigen. Es ist aber auch möglich, Fußelemente 24 so zu befestigen, wie es bereits in Verbindung mit den Fußelementen 25 der Fig. 3 beschrieben wurde.

Der Einsatz der Grundplatte, so wie in den Fig. 5 und 6 dargestellt, zeigt, daß diese in sehr universeller Weise als Grundplatte in den verschiedensten Anwendungsfällen verwendet werden kann. Die zum Aufbau von Vorrichtungen und Anbau von Aufnahmeteilen vorgesehenen konkaven Kugelkalotten, die die Rasterpunkte eines entsprechenden Systems definieren, lassen sich in sehr universeller Weise auch zur Befestigung anderer Bau- und Vorrichtungsteile verwenden.

## Patentansprüche

1. Grundplatte zum Aufbau von Vorrichtungen zum Aufspannen von Werkstücken in definierter und reproduzierbarer Lage mit in regelmäßigen Koordinatenabständen ausgebildeten Rasterpunkten, **dadurch gekennzeichnet, daß** die Rasterpunkte in Form von konkaven Kugelkalotten (2) gebildet sind, deren Mittelpunkte (5) auf sich im Rastermaß senkrecht kreuzenden Linien (4) liegen, die die ideale Plattenform beschreiben.

2. Grundplatte nach Anspruch 1, **dadurch gekennzeichnet, daß** diese als in der Aufspannebene oder Draufsicht regelmäßiges Gitterwerk ausgebildet ist, dessen diagonale Gitterstäbe (11) unter einem Winkel von 45° zu den durch die Mittelpunkte (5) der Kugelkalotten (2) verlaufenden Mittellinien (4) verlaufen,
daß die Mittelpunkte (5) der Kugelkalotten (2) jeweils in der Mitte des entsprechenden Gitterstabes (11) liegen und
daß die Durchbrüche (12) zwischen den Gitterstäben (11) einen regelmäßigen, vorzugsweise im wesentlichen einen quadratischen Querschnitt aufweisen.

3. Grundplatte nach Anspruch 2, **dadurch gekennzeichnet, daß** in den Knoten der diagonalen Gitterstäbe (11) ebenfalls Kugelkalotten (2) ausgebildet sind, deren Mittelpunkte (14) auf den Schnittlinien der Diagonalen der Gitterstäbe liegen.

4. Grundplatte nach Anspruch 2 oder 3, **dadurch gekennzeichnet, daß** in den Kugelkalotten (2) senkrecht zu den Mittellinien (4) Befestigungsbohrungen (6), gegebenenfalls mit Gewinde, vorgesehen sind.

5. Grundplatte nach einem oder mehreren der Ansprüche 2 bis 4, **dadurch gekennzeichnet, daß** diese auf einer Linie durch die Knoten (14) der diagonalen Gitterstäbe (11) in zwei oder mehrere entsprechend kleinere Grundplatten getrennt ist,
daß in den senkrechten Trennflächen (15) konkave Kugelkalotten (16) mit Befestigungsbohrungen vorgesehen sind, und
daß diese einzelnen Grundplatten unter Zwischenschaltung von scheibenförmigen Linsen (17) mit entsprechenden konvexen Kugelkalotten durch Befestigungsschrauben (18) zur entsprechend größeren Grundplatten verbindbar sind, wobei die wirksame Dicke der scheibenförmigen Linsen der Dicke des beim Trennen entfernten Fleisches entspricht.

6. Grundplatte nach einem oder mehreren der Ansprüche 2 bis 5, **dadurch gekennzeichnet, daß** die konkaven Kugelkalotten (2) und gegebenenfalls die Befestigungsbohrungen (6) vorzugsweise nur auf einer Seite vorgesehen sind, die zur Befestigung von Fuß- oder Verbindungselementen (21, 24) in Gebrauchslage die Unterseite bildet,
daß die Füße (22) der Fuß- oder Verbindungselemente der Form vorzugsweise quadratisch der Durchbrüche (12) entsprechen und in einer Stellung durch diese von der Oberseite durchsteckbar sind und auf der der Unterseite zugekehrten Fläche konvexe Kugelkalotten (20) im Rastermaß beabstandet an den Enden der senkrecht zueinander verlaufenden Diagonalen aufweisen und
daß die Fuß- oder Befestigungselemente nach dem Durchstecken durch Drehen um ihre Achse um 45° sowie dem Einrasten der konvexen Kugelkalotten (20) in die zugeordneten konkaven Kugelkalotten (2) durch Befestigungsmittel (23) befestigbar sind.

7. Grundplatte nach einem oder mehreren der vorstehenden Ansprüche, **dadurch gekennzeichnet, daß** diese als Gußkörper aus Aluminiumguß hergestellt ist.

## Claims

1. Base plate for the construction of devices for mounting workpieces in a clearly defined, reproducible position with grid points formed with regular coordinate spacings, **characterized in that** the grid points are in the form of concave, spherical indentations (2), whose centres (5) are located on lines (4) vertically crossing with the pitch and which describe the ideal plate shape.

2. Base plate according to claim 1, **characterized in that** it is constructed as a regular latticework in the mounting plane or plan view and whose diagonal lattice bars (11) are at an angle of 45° to the axes (4) passing through the centres (5) of the spherical indentations (2), that the centres (5) of the spherical indentations (2) are in each case located in the centre of the corresponding lattice bar (11) and that the openings (12) between the lattice bars (11) have a rectangular and preferably a substantially square cross-section.

3. Base plate according to claim 2, **characterized in that** in the nodes of the diagonal lattice bars (11) are also formed spherical indentations, whose centres (14) are located on the intersection lines of the diagonals of the lattice bars.

4. Base plate according to claim 2 or 3, **characterized in that** optionally threaded fixing holes (6) are provided in the spherical indentations (2) perpendicular to the axes (4).

5. Base plate according to one or more of the claims 2 to 4, **characterized in that**, on a line through the nodes (14) of the diagonal lattice bars (11), it is separated into two or more correspondingly smaller base plates, that in the vertical separating surfaces (15) are provided concave spherical indentations (16) with fixing holes and that these individual base plates, accompanied by the interposing of disk-shaped lenses (17), are connectable to corresponding convex, spherical indentations by fixing screws (18) to form correspondingly larger base plates, the effective thickness of the disk-shaped lenses corresponding to the thickness of the metal removed during separation.

6. Base plate according to one or more of the claims 2 to 5, **characterized in that** the concave, spherical indentations (2) and optionally the fixing holes (6) are preferably only provided on one side forming the underside for fixing base or connecting elements (21, 24) in the use position, that the bases (22) of the base or connecting elements correspond to the preferably square shape of the openings (12) and in one position can be engaged through the same from above and on the surface facing the underside there are convex, spherical indentations spaced with the pitch at the ends of the diagonals which are perpendicular to one another and that the base or fixing elements, following engaging through, can be fixed by fixing means (23) by rotation about the axis of 45° and the locking of the convex, spherical indentations (20) in the associated concave, spherical indentations (2).

7. Base plate according to one or more of the preceding claims, **characterized in that** it is made in the form of an aluminium casting.

## Revendications

1. Plaque de base pour poser des dispositifs pour serrer des pièces dans une position définie et reproductible avec des points de trame conçus à des espacements de coordonnées réguliers, **caractérisée en ce que** les points de trame sont formés sous la forme de calottes sphériques (2) concaves, dont les centres (5) se situent sur des lignes (4) se croisant perpendiculairement dans la dimension de trame, lignes qui décrivent la plaque de forme idéale.

2. Plaque de base selon la revendication 1, **caractérisée en ce que** celle-ci est conçue comme un grillage régulier dans le plan de serrage ou en vue de dessus, dont les barreaux de grille (11) diagonales sont agencées en formant un angle de 45° par rapport aux lignes médianes (4) passant par les centres (5) des calottes sphériques (2),
**en ce que** les centres (5) des calottes sphériques (2) passent respectivement au centre du barreau de grille (11) correspondant et
**en ce que** les passages (12) entre les barreaux de grille (11) présentent une section regulière et de préférence sensiblement une section carrée.

3. Plaque de base selon la revendication 2, **caractérisée en ce que** dans les noeuds des barreaux de grille (11) diagonaux sont conçues également des calottes sphériques (2), dont les centres (14) sont situés sur les lignes d'intersection des diagonales des barreaux de grille.

4. Plaque de base selon la revendication 2 ou 3, **caractérisée en ce que** des alésages de fixation (6), éventuellement avec filetage, sont prévus dans les calottes sphériques (2) perpendiculairement aux lignes médianes (4).

5. Plaque de base selon l'une quelconque ou plusieurs des revendications 2 à 4, **caractérisée en ce que** cette plaque est divisée sur une ligne par les noeuds (14) des barreaux de grille (11) diagonaux en deux ou plusieurs plaques de base en conséquence plus petites,
**en ce que** des calottes sphériques (16) concaves avec des alésages de fixation sont prévues dans les surfaces de séparation (15) perpendiculaires, et
**en ce que** ces plaques de base individuelles peuvent être reliées avec l'intercalage de lentilles (17) en forme de disques à des calottes sphériques convexes correspondantes par des vis de fixation (18) pour former des plaques de base en conséquence plus grandes, l'épaisseur efficace des lentilles en forme de disques correspondant à l'épaisseur de la matière enlevée lors de la séparation.

6. Plaque de base selon l'une quelconque ou plusieurs des revendications 2 à 5, **caractérisée en ce que** les calottes sphériques (2) concaves et éventuellement les alésages de fixation (6) sont prévus de préférence seulement sur un côté qui forme le côté inférieur pour la fixation d'éléments de base ou de liaison (21, 24) dans la position d'utilisation, **en ce que** les pieds (22) des éléments de base ou de liaison correspondent à la forme de préférence carrée des passages (12) et peuvent être traversés dans une position par ces percements par le côté supérieur et présentent sur la surface tournée vers le côté inférieur des calottes sphériques (20) convexes dans la dimension de trame espacées sur les extrémités des diagonales agencées perpendiculairement les unes aux autres et **en ce que** les éléments de base ou de fixation peuvent être fixés par des moyens de fixation (23) après l'emboîtement par rotation autour de leur axe de 45° et après l'engagement des calottes sphériques (20) convexes dans les calottes sphériques (2) concaves attribuées.

7. Plaque de base selon l'une quelconque ou plusieurs des revendications précédentes, **caractérisée en ce que** cette plaque est fabriquée comme un corps moulé en fonte d'aluminium.
